Europäisches Patentamt

European Patent Office

Office européen des brevets

(11) Numéro de publication: **0 313 065**
**A1**

## (12) DEMANDE DE BREVET EUROPEEN

(21) Numéro de dépôt: 88117564.0

(22) Date de dépôt: 21.10.88

(51) Int. Cl.⁴: **E01C 7/30 , E04F 15/12 , C04B 40/00**

(30) Priorité: 22.10.87 FR 8714618

(43) Date de publication de la demande:
26.04.89 Bulletin 89/17

(84) Etats contractants désignés:
AT BE CH DE ES FR GB GR IT LI LU NL SE

(71) Demandeur: CHROMOROC
17, Rue du Port B.P.43
F-27400 Louviers(FR)

(72) Inventeur: Scheiwiller, Jurg
76, Rue du Général de Gaulle
F-27100 Le Vaudreuil(FR)

(74) Mandataire: Casalonga, Axel et al
BUREAU D.A. CASALONGA - JOSSE
Morassistrasse 8
D-8000 Munich 5(DE)

(54) **Revêtement minéral et procédé pour le préparer.**

(57) Revêtement constitué (a) de particules dures de granulométrie moyenne (G), telles que gravier, colorées au préalable, et (b) d'une résine, les interstices formés entre les particules étant remplis par une matière de remplissage (MR) de faible granulométrie, les particules de granulométrie moyenne et la matière de remplissage de faible granulométrie étant liées par une résine, l'ensemble formant une structure fermée.

Ce revêtement décoratif peut être appliqué directement sur le sol ou bien sur un support amovible, il présente un caractère esthétique, il est facile à nettoyer et présente une bonne résistance.

**FIG.3**

SOL OU SUPPORT

EP 0 313 065 A1

## REVETEMENT MINERAL ET PROCEDE POUR LE PREPARER

L'invention a pour objet un revêtement minéral et plus particulièrement un revêtement appliqué sur le sol ou sur un support anovible pouvant être utilisé comme revêtement de sol, revêtement mural, clôture, mur, élément de protection, de séparation ou de support, aussi bien à l'intérieur d'un bâtiment, chez les particuliers et dans des endroits publiques, notamment pour salles de bains, magasins, restaurants, hôtels, salles d'expositions, qu'à l'extérieur, notamment pour terrasses, plages, piscines, espaces récréatifs, halls d'entrées, magasins de petites et grandes surfaces, usines et bureaux.

On connaît différents types de revêtements. Parmi les plus répandus, on peut citer le bois, le ciment, le béton, le bitume et les résines synthétiques. Ces dernières sont généralement mélangées à des charges.

Un revêtement doit posséder différentes qualités, notamment il doit être insonorisant, antistatique, non inflammable, résistant aux chocs et à l'abrasion et facile à nettoyer. De plus, il doit être décoratif, présenter un caractère esthétique et être d'un prix de revient réduit.

On connaît des revêtements qui satisfont certaines des qualités ci-dessus énumérées et qui sont constitués de graviers ou de granulats de silice de forme irrégulière liés entre eux par un liant qui est généralement une résine synthétique. Ces graviers ou granulats ont généralement une granulométrie comprise entre 1 et 6 mm. Ces granulats sont disposés en une couche de plusieurs millimètres et un espace vide se forme entre les divers granulats superposés. La résine synthétique utilisée comme liant n'arrive pas à remplir complètement cet espace vide et, de ce fait, des interstices se forment à l'intérieur du revêtement qui, de ce fait, n'est pas complètement étanche, permet à la poussière et aux diverses saletés de s'accumuler à l'intérieur du revêtement, rendant le nettoyage très difficile.

Un autre inconvénient réside dans le fait que par suite de la forme irrégulière du gravier ou des granulats, ces derniers ne sont liés par la résine les uns aux autres ainsi qu'au support que sur une partie limitée de leur surface, ce qui réduit considérablement leur résistance, en particulier aux chocs et diminue leur résistance à l'usure.

Le brevet belge 899 599 divulgue un revêtement comprenant un mélange de pierrailles, de sable de concassage, des matières finement moulues appelées "filler", de pigments, un dope d'adhésivité et un liant à base de naphténate de calcium et d'huile de houille.

La demande de brevet allemand n° 2 306 360 enseigne un mortier à base de ciment, de sable et de particules de granulométrie plus grossières, mélangé à une résine synthétique, destiné à la réparation de la chaussée.

La demande de brevet français 2 208 860 a également pour objet un mortier constitué par un mélange de gravillons ou de sable et de matière finement moulue appelée "filler".

Les revêtements et mortiers selon ces documents ont un aspect poussiéreux, peu esthétique et ne conviennent pas comme revêtement décoratif. En outre, le fait que le revêtement soit obtenu par un mélange de la résine à la fois avec les particules de granulométrie moyenne et de granulométrie fine, ne favorise pas l'accrochage au support et rend la résistance à l'arrachage et au poinçonnage insuffisante.

L'invention a pour objet un revêtement qui supprime les inconvénients sus-indiqués.

L'invention concerne un revêtement décoratif ayant une bonne résistance à l'usure, à l'arrachage et au poinçonnage, à base de particules minérales de granulométrie moyenne colorées en une ou plusieurs couleurs au moyen de pigments et enrobées de résine, les espaces vides qui se forment, par suite de la forme irrégulière des particules, entre les particules d'une part, les particules et le support, d'autre part, étant remplis par des particules de faible granulométrie sous forme de poudre, perles, grains, granules, etc., l'ensemble des particules de granulométrie faible et moyenne étant solidement lié par une résine ou un mélange de résines.

L'invention a encore pour objet un revêtement de sol constitué de particules dures de granulométrie moyenne, telles que gravier, roche concassée, granulat de silice, enrobées d'une résine formant liant, les interstices entre ces particules étant remplis par une matière de remplissage pulvérulente ou de faible granulométrie, telle que grains, granules, perles, cette matière de remplissage de faible granulométrie étant elle-même enrobée d'une résine qui la rend solidaire des particules de granulométrie moyenne telles que gravier, et, de ce fait, les interstices sont supprimés et la cohésion et la résistance de l'ensemble sont augmentées.

L'invention a également pour objet un revêtement appliqué sur un support anovible pouvant être utilisé comme élément de protection et/ou de séparation et/ou comme élément décoratif sur le sol, les murs, les surfaces planes, telles que tables, établis, etc.

Le support sur lequel est appliqué le revêtement, selon l'invention, peut être une plaque ou une feuille en métal, en ciment, en béton, en plâtre, en fibre végétale ou minérale comme les fibres de verre; en bois naturel, en bois contreplaqué, en bois aggloméré avec des résines, en bois plastifié, en matière plastique, en résine thermodurcissable, ou en mélange de ces matières.

L'invention a également pour objet un procédé de préparation d'un revêtement, tel que décrit ci-dessus.

D'autres objets de l'invention apparaîtront à la lecture de la description et des exemples.

L'invention est également illustrée par le dessin annexé.

Sur ce dessin :

la figure 1 représente une vue de dessus d'un premier revêtement selon l'état de la technique;

la figure 2 représente une vue de dessus et

la figure 3 représente une coupe verticale d'un revêtement selon l'invention;

la figure 4 représente une vue de dessus et

la figure 5 représente une coupe verticale d'un deuxième revêtement selon l'état de la technique.

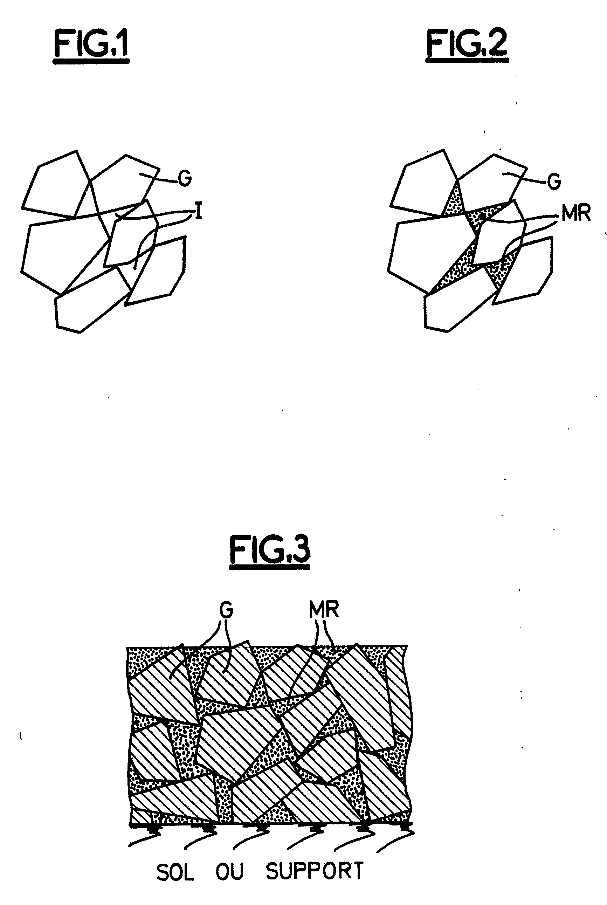

Le revêtement selon la figure 1 est constitué de graviers ou granulats et de résine.

On constate, sur cette figure 1, que ce revêtement comporte des interstices I entre les différents graviers ou granulats et de ce fait sa résistance est amoindrie.

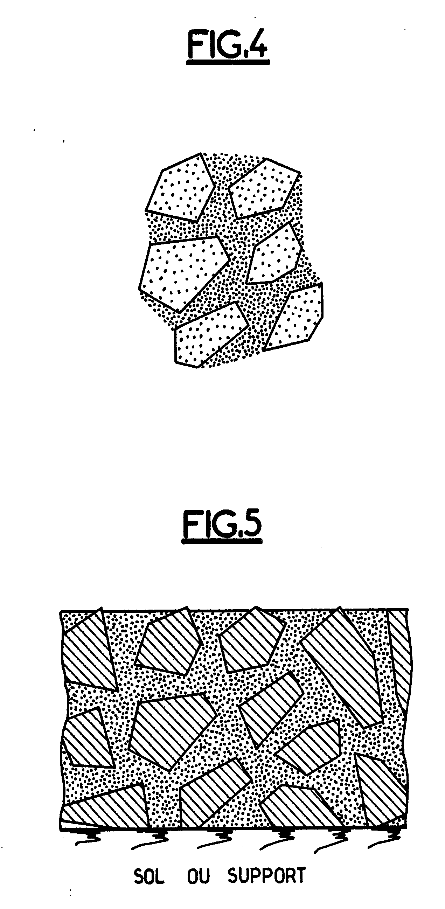

Le revêtement de l'état de la technique représenté par les figures 4 et 5 est préparé en mélangeant avec la résine et éventuellement un pigment à la fois les particules de granulométrie moyenne et la matière de granulométrie fine, dite "matière de remplissage", l'ensemble ainsi mélangé étant appliqué sur le sol ou le support.

Un tel revêtement laisse à désirer, aussi bien du point de vue esthétique que du point de vue de résistance.

Dans le revêtement selon l'invention, représenté par les figures 2 et 3, les particules de granulométrie moyenne, le pigment et la résine, sont mélangés ensemble et seuls les interstices I visibles sur la figure 1 sont remplis par la matière de remplissage MR.

Ce revêtement montre une plus grande résistance à l'usure et à l'arrachement que le revêtement selon les figures 4 et 5. En effet, les particules de granulométrie moyenne pigmentées et enrobées de résine étant d'abord appliquées sur le support en l'absence des particules de faible granulométrie, elles forment une structure plus solide que lorsque ces particules de granulométrie moyenne sont noyées lors de leur application sur le sol ou sur le support dans des particules de faible granulométrie.

La résistance du revêtement selon l'invention est également plus grande que la résistance d'un revêtement dans lequel on applique sur le support d'abord les matières de faible granulométrie mélangées à la résine et ensuite seulement la matière de granulométrie moyenne, car l'accrochage au support est plus mauvais.

Dans le revêtement selon l'invention, les particules de granulométrie moyenne sont colorées par mélange avec des pigments.

Il est possible d'obtenir des revêtements monocolores, bicolores ou multicolores ainsi que des revêtements chinés, par mélange des particules de granulométrie moyenne diversement colorées.

Selon un mode de réalisation préféré de l'invention, la matière de remplissage pulvérulente a la même composition chimique que les particules dures. La matière de remplissage peut être constituée par du sable ou, de préférence, par du gravier moulu, naturel ou pigmenté, préparé à partir du gravier utilisé comme particule dure.

La granulométrie des particules dures est habituellement comprise entre 1 et 6 mm, et de préférence entre 2 et 4 mm.

La granulométrie de la matière de remplissage peut être comprise entre 0,05 et 1 mm, avantageusement entre 0,1 et 0,6 mm, et de préférence entre 0,2 et 0,4 mm.

On peut utiliser une résine synthétique pour enrober et lier ensemble les particules dures telles que graviers et la matière de remplissage. Ces résines synthétiques sont choisies avantageusement dans le groupe formé par les résines polyacryliques, poly méthacryliques, les polyesters, les polyamides, les polyuréthanes et les résines époxydes. On préfère les résines époxydes.

On peut utiliser un type de résine pour enrober les particules dures de granulométrie moyenne et un autre type de résine pour lier ensemble les particules dures de granulométrie moyenne et la matière de remplissage de faible granulométrie.

Selon un mode de réalisation préféré :

(i) on utilise pour enrober les particules dures de granulométrie moyenne une résine epoxyde ayant une viscosité de 4000 à 9000 centipoises et de préférence environ 7000 centipoises avant mélange avec le durcisseur et une viscosité de 2000 à 4000 centipoises après mélange avec le durcisseur, et

(ii) on utilise une résine epoxyde ayant une viscosité de 600 à 1200 centipoises et de préférence de 800 à 900 centipoises avant mélange avec le durcisseur et une viscosité de 400 à 600 centipoises après mélange avec le durcisseur.

Selon un mode de réalisation préféré, la même résine est utilisée pour les deux opérations.

Selon un autre mode de réalisation préféré de l'invention, la résine utilisée pour lier ensemble les particules dures et la matière de remplissage forme également la couche supérieure du revêtement.

Selon un autre mode de réalisation, la résine époxyde a un poids équivalent d'époxyde de 190 à 290 ou de 197 à 206.

L'invention a également pour objet un procédé de préparation de revêtement. Ce procédé comporte les opérations suivantes :

(a) on applique sur le sol ou sur un support une couche de particules dures à granulométrie moyenne telle que gravier ou granulats de silice, pigmentées au préalable et mélangées à la résine immédiatement avant l'application;

(b) on laisse la résine se polymériser et/ou réticuler;

(c) on verse dessus la matière de remplissage de faible granulométrie;

(d) on fait pénétrer la matière de remplissage dans les interstices entre les particules de granulométrie moyenne;

(e) on applique la résine;

(f) on laisse la résine se polymériser et/ou réticuler.

L'invention sera mieux comprise à l'aide de l'exemple non limitatif suivant :

## EXEMPLE 1

### Revêtement de sol pour un magasin.

Par mètre carré de surface de revêtement, on mélange dans une bétonnière 13 kg de gravier, coloré au préalable, et 1,2 kg de résine (époxyde + durcisseur). La résine epoxyde a une viscosité de 7000 centipoises. Après mélange avec le durcisseur, sa viscosité est de 3000 centipoises. Ce mélange est étalé sur le sol. Après une pose de 48 heures destinée à permettre la polymérisation et la réticulation de la résine, on verse sur la structure ainsi préparée, par mètre carré, 1 kg de sable, on fait pénétrer le sable dans les interstices et on applique 1 kg de résine epoxyde ayant une viscosité de 850 centipoises et après mélange avec le durcisseur, une viscosité de 500 centipoises.

On laisse au repos pendant 48 heures pour terminer la polymérisation et la réticulation nécessaires.

On obtient un revêtement de sol coloré ayant une bonne résistance aux chocs et à l'usure et qui se nettoie facilement.

## EXEMPLE 2

Sur des plaques en aluminium de 2 mm d'épaisseur et de dimension de 2 m x 1 m, entouré d'un cadre de 10 mm de haut, on applique une grille constituée de cloisons minces entrecroisées hautes de 8 mm, formant des carrés à angle droit. Le cadre et la grille sont également en aluminium.

On prépare dans une bétonnière successivement deux mélanges, l'un coloré en rouge, l'autre en noir. Chaque mélange est obtenu à partir de 13 kg de gravier de granulométrie de 2 à 4 mm coloré au préalable avec des oxydes de fer et de 1,2 kg de résine époxyde ayant une viscosité de 6000 centipoises avant mélange avec le durcisseur et de 3000 centipoises après mélange avec le durcisseur.

Après une pose de 48 heures pendant laquelle la résine se polymérise, on applique par métre carré 1 kg de gravier moulu d'une granulométrie de 0,2 à 0,4 mm coloré dans la même couleur que le gravier appliqué en premier. On fait pénétrer ce gravier moulu dans les interstices et on applique ensuite par m$^2$ 1 kg de résine epoxyde ayant une viscosité de 750 centipoises avant mélange avec le durcisseur et une viscosité de 450 centipoises après mélange avec le durcisseur.

On laisse au repos pendant 48 heures pour terminer la polymérisation et la réticulation.

Les plaques ainsi préparées sont utilisées comme revêtement mural ou comme cloisons décoratives.

## Revendications

1. Revêtement minéral constitué (A) de particules dures de granulométrie moyenne, telles que gravier, roche concassée, granulats de silice, (B) d'une matière de remplissage dure de faible granulométrie, (C) de pigments, et (D) de résines formant liant, **caractérisé par le fait** que les particules dures de granulométrie moyenne sont colorées au moyen des pigments et enrobées de résine, (ii) que les interstices entre les particules de granulométrie moyenne sont remplis par la matière de faible granulométrie sous forme de poudre, grain, granule, perle, (iii) que les particules de granulométrie moyenne et les particules de faible granulométrie sont liées entre elles par une résine formant liant qui enrobe les particules de granulométrie moyenne, lesdites résines étant choisies dans le groupe formé par les résines polyacryliques, polyméthacryliques, les polyesters, les polyamides, les polyuréthanes, les résines epoxydes.

2. Revêtement de sol, caractérisé par le fait qu'il comprend les constituants (A), (B), (C) et (D) selon la revendication 1, appliqués sur le sol ou sur une couche intermédiaire directement appliquée sur le sol.

3. Revêtement selon la revendication 1, caractérisé par le fait qu'il comprend des constituants (A), (B), (C), (D), appliqués sur un support solide amovible.

4. Revêtement selon la revendication 3, caractérisé par le fait que le support solide est une plaque ou feuille en métal, en ciment, en béton, en plâtre, en fibres végétales ou minérales, en fibres de verre, en bois naturel, en bois contreplaqué, en bois aggloméré, en matière plastique, en matière thermo durcissable ou des mélanges de ces matières.

5. Revêtement selon les revendications 3 et 4, caractérisé par le fait qu'il est utilisé comme élément de séparation et/ou élément de protection et/ou comme élément décoratif sur le sol, les murs, les surfaces planes, telles que table, établi.

6. Revêtement selon l'une quelconque des revendications 1 à 5, caractérisé par le fait que les particules dures de granulométrie moyenne sont constituées par du gravier ou par des granulats de silice.

7. Revêtement selon les revendications 1 à 6, caractérisé par le fait que la matière de remplissage de faible granulométrie a la même composition chimique que les particules dures de granulométrie moyenne.

8. Revêtement selon la revendication 7, caractérisé par le fait qu'on utilise comme particules dures de granulométrie moyenne du gravier, et comme matière de remplissage de faible granulométrie du sable ou du gravier moulu.

9. Revêtement selon les revendications 1 à 8, caractérisé par le fait que la granulométrie des particules dures de granulométrie moyenne est comprise entre 1 et 6 mm.

10. Revêtement selon la revendication 9, caractérisé par le fait que la granulométrie des particules dures est comprise entre 1 et 4 mm.

11. Revêtement selon les revendications 1 à 10, caractérisé par le fait que la granulométrie de la matière de remplissage est comprise entre 0,05 et 1 mm.

12. Revêtement selon la revendication 11, caractérisé par le fait que la granulométrie de la matière de remplissage est comprise entre 0,2 et 0,4 mm.

13. Revêtement selon les revendications 1 à 12, caractérisé par le fait que les résines sont des résines époxydes.

14. Revêtement selon la revendication 13, caractérisé par le fait que la résine époxyde a un poids équivalent d'époxyde de 190 à 290.

15. Revêtement selon la revendication 13, caractérisé par le fait que la résine époxyde a un poids équivalent d'époxyde de 197 à 206.

16. Revêtement selon les revendications 1 à 15, caractérisé par le fait que les particules de granulométrie moyenne sont enrobées d'une résine epoxyde ayant une viscosité de 4000 à 9000 centipoises, avant mélange avec le durcisseur et une viscosité de 2000 à 4000 centipoises après mélange avec le durcisseur.

17. Revêtement selon les revendications 1 à 16, caractérisé par le fait que les particules de granulométrie moyenne et les particules de faible granulométrie sont liées entre elles par une résine epoxyde ayant une viscosité de 600 à 1200 centipoises avant mélange avec le durcisseur et une viscosité de 400 à 600 centipoises après mélange avec le durcisseur.

18. Procédé de préparation d'un revêtement, comprenant (A) des particules dures à granulométrie moyenne, telles que gravier, roche concassée, granulats de silice, (B) d'une matière de remplissage de faible granulométrie, (C) des pigments, (D) des résines, caractérisé par le fait que :

(i) on mélange les particules dures à granulométrie moyenne avec le pigment;

(ii) on mélange les particules pigmentées avec la résine;

(iii) on applique le mélange ainsi obtenu sur le sol, sur une couche intermédiaire ou sur un support amovible;

(iv) on laisse au repos pour permettre la polymérisation et/ou la réticulation de la résine;

(v) on verse sur la structure ainsi formée la matière de remplissage de faible granulométrie qu'on fait pénétrer entre les interstices;

(vi) on applique par dessus une deuxième résine;

(vii) on laisse la résine se polymériser et/ou réticuler.

19. Procédé selon la revendication 18, caractérisé par le fait que les opérations (i) et (ii) sont réalisées simultanément.

20. Procédé selon la revendication 18 ou 19, caractérisé par le fait que la matière à granulométrie moyenne est du gravier et la matière à granulométrie fine est du gravier moulu.

21. Procédé selon les revendications 18 à 20, caractérisé par le fait qu'on utilise une résine époxyde avec durcisseur.

22. Procédé selon la revendication 21, caractérisé par le fait qu'on utilise une résine époxyde ayant un poids équivalent d'époxyde de 190 à 290 ou de 197 à 206.

23. Procédé selon les revendications 18 à 22, caractérisé par le fait que les particules de granulométrie moyenne sont enrobées d'une résine epoxyde ayant une viscosité de 4000 à 9000 centipoises, avant mélange avec le durcisseur et une viscosité de 2000 à 4000 centipoises après mélange avec le durcisseur.

24. Procédé selon les revendications 18 à 23, caractérisé par le fait que les particules de granulométrie moyenne et les particules de faible granulométrie sont liées entre elles par une résine epoxyde ayant une viscosité de 600 à 1200 centipoises avant mélange avec le durcisseur et une viscosité de 400 à 600 centipoises après mélange avec le durcisseur.

## FIG.1

## FIG.2

## FIG.3

SOL   OU   SUPPORT

# FIG.4

# FIG.5

SOL OU SUPPORT

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | BE-A- 899 599 (ARKLOW) <br> * En entier * <br> --- | 1-7,13 | E 01 C 7/30 <br> E 04 F 15/12 <br> C 04 B 40/00 |
| Y,A | FR-A-2 208 860 (WOLFER & GOEBEL) <br> * En entier * | 1-7,13 | |
| D | | 11 | |
| A | DE-A-1 509 879 (SCHAEFER) <br> * En entier * <br> --- | 1-7,8, 13 | |
| D,A | DE-A-2 306 360 (WOLFER & GOEBEL) <br> * En entier * <br> --- | 1-7,13 | |
| A | US-A-4 017 449 (AUDYKOWSKI) <br> * Exemples 1,4,7 * <br> ----- | 14-17 | |

**DOMAINES TECHNIQUES RECHERCHES (Int. Cl.4)**

E 01 C
E 04 F
C 04 B

**Le présent rapport a été établi pour toutes les revendications**

| Lieu de la recherche | Date d'achèvement de la recherche | Examinateur |
|---|---|---|
| LA HAYE | 12-01-1989 | DIJKSTRA G. |

EPO FORM 1503 03.82 (P0402)

**CATEGORIE DES DOCUMENTS CITES**

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant